# DEMANDE DE BREVET EUROPEEN

(11) **EP 1 426 236 A1**
(43) Date de publication de la demande: **09.06.2004**
(21) Numéro de dépôt: 03292976.2
(22) Date de dépôt: 28.11.2003
(51) Int. Cl.: B60Q 1/00, F21V 3/04

(54) **Procédé de réalisation d'un motif décoratif sur un composant d'un dispositif d'éclairage ou de signalisation automobile**

(30) Priorité: 05.12.2002 FR 0215674
(71) Demandeur: VALEO VISION, 93012 Bobigny Cédex (FR)
(72) Inventeur: Giroud, Thomas, 84000 Avignon (FR)

(57) **Abrégé**

La présente invention concerne un procédé de réalisation d'un motif décoratif sur un composant d'un dispositif d'éclairage ou de signalisation automobile. Ce procédé est plus particulièrement adapté à la réalisation de masque pour projecteur ou feu. Le procédé comporte une étape de mise en forme dudit composant dans une matière prédéterminée et une étape d'exposition à un rayonnement laser d'au moins une surface dudit composant.

## Description

La présente invention concerne un procédé de réalisation d'un motif décoratif sur un composant d'un dispositif d'éclairage ou de signalisation automobile. Ce procédé est plus particulièrement adapté à la réalisation de motifs sur des masques ou des socles pour projecteur ou feu.

Très souvent, les constructeurs automobiles exigent la présence de motifs particuliers sur des dispositifs d'éclairage ou de signalisation. Ces motifs précis et indélébiles sur certaines pièces telles que le masque du projecteur ou le socle du feu ont la plupart du temps un but exclusivement esthétique.

Ces motifs sont obtenus, selon une première méthode, par marquage du moule de fabrication, entraînant ainsi un manque de flexibilité et un risque d'usure du moule. Le moule peut facilement s'user ou être contaminé par des impuretés.

Une deuxième méthode consiste à utiliser un dépôt d'encres (sérigraphie) sur la pièce à décorer. Une telle solution pose des problèmes de tenue de l'encre au cours de la vie de la pièce ainsi que de résistance aux rayons ultraviolets.

Une troisième méthode consiste à réaliser les motifs en utilisant de la peinture et des systèmes de pochoir ou d'épargne. Cependant, une telle méthode ne permet pas d'obtenir des limites très précises, la peinture s'infiltrant entre la pièce à décorer et le pochoir.

Un quatrième méthode consiste à ajouter des insert tels que des films décoratifs du type IMD (In Mold Decoration en anglais). Une telle solution est coûteuse et pose des problèmes liés au thermoformage du film.

La présente invention vise à fournir un procédé de réalisation d'un motif décoratif sur un composant d'un dispositif d'éclairage ou de signalisation automobile permettant la réalisation à bas coût de motifs précis sur des pièces telles que les masques ou socles sans utiliser de moule avec un marquage particulier, de peinture ou d'encre de marquage ou d'inserts tels que des films

La présente invention propose à cet effet un procédé de réalisation d'un motif décoratif sur un composant d'un dispositif d'éclairage ou de signalisation automobile comportant une étape de mise en forme dudit composant dans une matière prédéterminée.

Selon l'invention, ledit procédé comporte une étape d'exposition à un rayonnement laser d'au moins une surface dudit composant.

Dans la présente description, on désigne par composant un élément d'un dispositif d'éclairage ou de signalisation qui ne participe pas à la formation du faisceau lumineux émis vers l'extérieur, tel qu'un masque ou un socle de dispositif d'éclairage ou de signalisation.

On part ainsi d'un composant mis en forme, par exemple par moulage, dans une matière telle qu'une matière plastique qui peut être métallisée ou non. La technologie laser permet ensuite de réaliser soit une ablation sélective sur ledit composant lorsque celui ci est métallisé soit une exposition directement sur la matière plastique.

L'ablation d'une surface métallique particulière n'affecte pas la matière plastique et laisse donc apparaître une zone de matière plastique. Cette zone correspond à un motif décoratif particulier. Si la matière plastique est colorée, le motif révélé est lui-même de cette couleur.

L'exposition du laser directement sur la matière plastique permet de modifier la couleur de la matière plastique. On obtient ainsi un motif directement sur le plastique avec une couleur déterminée en fonction des paramètres du rayonnement laser

Un tel procédé permet donc de partir d'un composant sans marquage et offre une grande flexibilité d'utilisation pour réaliser tout type de motifs. Le procédé n'implique ni adaptation du masque ni insert ou matière de marquage.

Avantageusement, une pluralité de surfaces dudit composant est exposée au dit rayonnement laser.

Ainsi, on peut créer une pluralité de motifs sur le composant. Les motifs peuvent être de forme identique ou différente.

Selon un premier mode de réalisation, le procédé comporte une étape de métallisation complète dudit composant préalable à ladite étape d'exposition à un rayonnement laser, ladite étape d'exposition étant une étape d'ablation sélective par rayonnement laser du métal de ladite surface dudit composant métallisé.

Selon un deuxième mode de réalisation, ladite matière prédéterminée est une matière plastique et ladite étape d'exposition à un rayonnement laser est telle que la couleur de ladite surface est modifiée par rapport à la couleur de ladite matière plastique.

Avantageusement, le rayonnement laser est réalisé au moyen d'un laser YAG, d'un laser CO₂ ou d'un laser excimère.

La présente invention a également pour objet un composant d'un dispositif d'éclairage ou de signalisation automobile obtenu par le procédé selon l'invention, ledit composant étant en une matière prédéterminée et comportant au moins une surface obtenue après exposition à un rayonnement laser.

La présente invention a en outre pour objet un composant d'un dispositif d'éclairage ou de signalisation automobile obtenu par le procédé selon l'invention, ledit composant étant en matière plastique et comportant une surface métallisée et une surface non métallisée obtenue après ablation sélective du métal par rayonnement laser.

Avantageusement, ladite matière plastique est colorée.

Avantageusement, ladite matière plastique est une matière thermoplastique.

Avantageusement, ledit composant comporte une pluralité de surfaces obtenues après exposition à un rayonnement laser.

Ainsi, on peut obtenir une pluralité de motifs décoratifs sur le composant.

D'autres caractéristiques et avantages de la présente invention apparaîtront dans la description suivante de modes de réalisation de l'invention, donnés à titre illustratif et nullement limitatif.

Sur la figure unique :

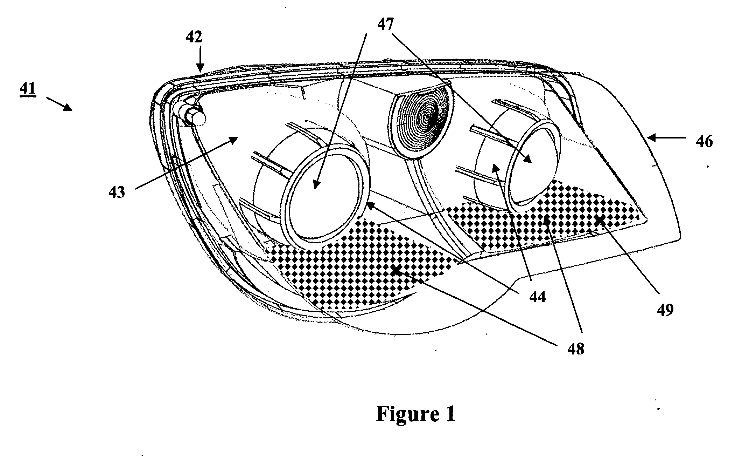

- La figure 1 représente schématiquement un projecteur comportant un masque ayant des motifs décoratifs obtenus par le procédé selon l'invention.

La figure 1 représente schématiquement un projecteur 41 comportant un masque ayant des motifs décoratifs obtenus par le procédé selon l'invention.

Le projecteur 41 comporte notamment :
- un boîtier 42,
- une glace de protection 46,
- des lentilles de projecteurs elliptiques 47,
- un masque 43.

Les trois éléments, boîtier 42, glace de protection 46 et masque 43 sont réalisés en matière thermoplastique par injection.

Le masque 43 comportent deux orifices 44 pour les lentilles de projecteurs elliptiques 47.

Le masque 43 inclut deux surfaces 48, chacune des deux surfaces 48 comportant une pluralité de losanges 49 noirs.

Le masque 43 est obtenu par injection d'une matière thermoplastique teintée masse noire.

Le masque 43 est ensuite entièrement métallisé par une couche d'aluminium.

On effectue ensuite une ablation sélective de la couche d'aluminium de façon à laisser apparaître les losanges 49 noirs.

Ce procédé permet donc la réalisation à bas coût d'un masque avec des motifs décoratifs ou des logos.

Bien entendu, l'invention n'est pas limitée aux modes de réalisation qui viennent d'être décrits.

Notamment, les matériaux décrits soumis à un rayonnement laser étaient le plastique et l'aluminium mais il peut s'agir d'autres matériaux tels que d'autres métaux.

En outre, l'invention a été décrite uniquement dans le cas d'un masque de projecteur mais elle peut également s'appliquer à d'autres dispositifs utilisés pour l'éclairage ou la signalisation automobile tels que les éléments du feu arrière.

## Revendications

1. Procédé de réalisation d'un motif décoratif sur un composant d'un dispositif d'éclairage ou de signalisation automobile comportant une étape de mise en forme dudit composant dans une matière prédéterminée,
**caractérisé en ce que** ledit procédé comporte une étape d'exposition à un rayonnement laser d'au moins une surface dudit composant.

2. Procédé selon la revendication 1 **caractérisé en ce qu'**une pluralité de surfaces dudit composant est exposée au dit rayonnement laser.

3. Procédé selon l'une des revendications 1 ou 2 **caractérisé en ce qu'**il comporte une étape de métallisation complète dudit composant préalable à ladite étape d'exposition à un rayonnement laser, ladite étape d'exposition étant une étape d'ablation sélective par rayonnement laser du métal d'au moins une surface dudit composant métallisé.

4. Procédé selon l'une des revendications 1 ou 2 **caractérisé en ce que** ladite matière prédéterminée est une matière plastique et **en ce que** ladite étape d'exposition à un rayonnement laser est telle que la couleur de ladite surface est modifiée par rapport à la couleur de ladite matière plastique.

5. Procédé selon l'une des revendications précédentes caractérisé en ce le rayonnement laser est réalisé au moyen d'un laser YAG, d'un laser CO₂ ou d'un laser excimère.

6. Composant d'un dispositif d'éclairage ou de signalisation automobile obtenu par le procédé selon l'une des revendications 1 à 5, ledit composant étant en une matière prédéterminée et comportant au moins une surface obtenue après exposition à un rayonnement laser.

7. Composant d'un dispositif d'éclairage ou de signalisation automobile obtenu par le procédé selon la revendication 3, ledit composant étant en matière plastique et comportant une surface métallisée et une surface non métallisée obtenue après ablation sélective du métal par rayonnement laser.

8. Composant selon la revendication 7 **caractérisé en ce que** ladite matière plastique est colorée.

9. Composant selon l'une des revendications 7 et 8 **caractérisé en ce que** ladite matière plastique est une matière thermoplastique.

10. Composant selon l'une des revendications 6 à 9 **caractérisé en ce qu'**il comporte une pluralité de surfaces obtenues après exposition à un rayonnement laser.
